# FASCICULE DE BREVET EUROPEEN

(11) **EP 1 139 838 B1**
(45) Date de publication et mention de la délivrance du brevet: **16.03.2005**
(21) Numéro de dépôt: 99959504.4
(22) Date de dépôt: 21.12.1999
(51) Int. Cl.: A47J 43/08

(54) **ROBOT MENAGER MULTIFONCTIONS**
MEHRZWECKKÜCHENMASCHINE
MULTIFUNCTION FOOD PROCESSOR

(30) Priorité: 21.12.1998 FR 9816391
(43) Date de publication de la demande: 10.10.2001
(73) Titulaire: SEB S.A., 69132 Ecully (FR)
(72) Inventeur: CHARLES, Patrick, F-65290 Louey (FR); BINEAU, Pierre, F-64800 Asson (FR); SMIT, Robert, F-65290 Louey (FR); SALLADARRE, Claude, F-64420 Espoey (FR)
(74) Mandataire: Kiehl, Hubert
(86) Numéro de dépôt international: PCT/FR1999/003215
(87) Numéro de publication internationale: WO 2000/036960

(56) Documents cités:
- EP-A- 0 157 128
- EP-A- 0 292 664
- EP-A- 0 699 409
- GB-A- 1 037 180
- GB-A- 2 167 312

## Description

La présente invention est relative au domaine technique des appareils ménagers de préparation culinaire multifonctions. La présente invention concerne plus particulièrement les robots ménagers multifonctions comportant un bâti prévu pour recevoir un récipient de travail fermé par un couvercle. La présente invention se rapporte également à un accessoire pour préparations liquides dans un récipient de robot ménager.

Les préparations réalisées par des robots ménagers sont généralement réparties en deux catégories : les préparations dites solides, comprenant les préparations hachées, râpées, émincées, ainsi que le travail de la pâte, et les préparations dites liquides, visant à obtenir un mélange liquide bien homogène. En particulier, les veloutés de potage sont des préparations liquides obtenues à partir d'ingrédients solides tels que des légumes cuits. Chacune de ces catégories de préparation est usuellement réalisée dans un récipient de travail approprié.

Les récipients de travail pour la réalisation de mélanges liquides se présentent sous la forme d'un récipient en forme de demi-ogive, étroit à la base, évasé dans sa partie haute, et de hauteur importante. La base est équipée d'un couteau de petit diamètre généralement constitué de quatre lames et tournant à très grande vitesse (entre 10 000 et 15 000 tours par minute). Ces récipients sont pourvus de nervures destinées à faciliter le mélange du liquide. Un appareil comportant un tel récipient est connu du document GB 1 037 180.

Les récipients de travail pour la réalisation de préparations hachées, râpées ou émincées sont généralement de forme cylindrique et leur hauteur ne dépasse pas la dimension de leur diamètre. Les vitesses de rotation des outils tournant dans ces récipients peuvent être de l'ordre de 50 à 100 tours par minute, pour le pétrissage de la pâte, jusqu'à 1500 - 2000 tours par minute, pour les préparations hachées.

Les robots ménagers les plus simples comportent un récipient adapté à l'une ou l'autre de ces catégories de préparation, tandis que les robots multifonctions peuvent réaliser les deux catégories de préparations.

Le document WO 95/20903 décrit un robot ménager multifonctions comportant un compartiment moteur, au-dessus duquel peut être monté un récipient de travail associé à un outil adapté pour la réalisation de mélanges liquides, et un socle prolongeant le compartiment moteur dans sa partie basse, sur lequel peut être monté un autre récipient de travail associé à des outils adaptés pour la réalisation de préparations hachées, râpées ou émincées. Chacun des récipients de travail est associé à un moyen d'entraînement distinct. Cette disposition permet d'obtenir les vitesses adaptées pour les différents outils utilisés dans chacun des récipients de travail. En effet les mélanges liquides demandent une vitesse de rotation d'outil beaucoup plus élevée que les préparations hachées, râpées ou émincées.

Le document DE 39 33 036 décrit un robot ménager multifonctions comportant un compartiment moteur et un socle prolongeant le compartiment moteur dans sa partie basse. Le socle comporte un premier moyen d'entraînement prévu pour recevoir un récipient de travail associé à un outil adapté pour la réalisation de mélanges liquides, et un deuxième moyen d'entraînement prévu pour recevoir un autre récipient de travail, associé à des outils adaptés pour la réalisation de préparations hachées, râpées ou émincées. Chaque moyen d'entraînement est prévu pour fournir les vitesses d'outils adaptées aux préparations correspondantes.

Il est connu également de réaliser un robot ménager multifonctions comportant un compartiment moteur et un socle prolongeant le compartiment moteur dans sa partie basse, dont le socle comporte un seul moyen d'entraînement. Le socle peut recevoir un récipient de travail associé à des outils adaptés pour la réalisation de préparations hachées, râpées ou émincées et un autre récipient de travail associé à un outil adapté pour la réalisation de mélanges liquides, ce dernier récipient comportant un dispositif accélérateur adapté pour fournir les vitesses d'outil nécessaires à la réalisation de mélanges de liquides à partir d'un moyen d'entraînement dont les vitesses sont prévues pour les outils destinés à hacher, râper ou émincer.

Les appareils précités permettent de réaliser des préparations de grande qualité mais comportent plusieurs inconvénients. Tout d'abord, ces appareils sont encombrants, puisqu'ils comportent deux récipients de travail distincts. De plus la capacité des récipients pour la réalisation de mélanges liquides n'est généralement pas très importante. Enfin, de nombreux récipients pour la réalisation de mélanges liquides ne comportent pas de sécurité empêchant le fonctionnement de l'appareil en l'absence de couvercle. Le document EP 0 699 409 décrit toutefois un appareil prévu pour la réalisation de mélanges liquides comportant un dispositif de sécurité empêchant le fonctionnement de l'appareil en l'absence de couvercle.

L'objet de la présente invention est de remédier aux inconvénients précités et de proposer un appareil électroménager de préparation culinaire permettant de réaliser de manière satisfaisante des préparations hachées, râpées ou émincées ainsi que des mélanges liquides de qualité comparable à celle obtenue avec les appareils mélangeurs dédiés aux liquides, en offrant un encombrement réduit sans pour autant pénaliser la capacité de préparation ni la polyvalence de l'appareil.

Un autre objet de la présente invention vise à proposer un accessoire pour préparations liquides permettant de réaliser des mélanges liquides de qualité comparable à celle obtenue avec les appareils mélangeurs dédiés aux liquides, destiné à être utilisé dans le récipient de travail d'un robot ménager multifonctions ne comportant pas de sortie d'entraînement apte aux vitesses élevées requises pour les préparations liquides.

Les objets assignés à l'invention sont atteints avec un appareil électroménager de préparation culinaire selon les caractéristiques de la revendication 1.

Grâce à ces dispositions, les aliments frappés par cette lame et éjectés vers l'extérieur participent à la formation du vortex nécessaire pour le mélange de la préparation. La stabilité de l'ensemble de travail est améliorée. L'écoulement de la préparation liquide est favorisé. Le mélange des préparations liquides est facilité. Ces dispositions permettent d'améliorer notablement la qualité des préparations liquides sans dégrader la qualité des autres préparations tels que les préparations hachées ou le pétrissage de la pâte. Il est ainsi possible de réaliser dans ce récipient de travail des préparations demandant une vitesse de rotation de l'outil élevée, telles que les préparations liquides, avec l'ensemble de travail équipé de l'outil précité, ainsi que des préparations demandant une vitesse de rotation plus faibles, telles que les préparations hachées, râpées, émincées, ou encore le travail de la pâte, avec des ensembles de travails équipés des outils adéquats. De ce fait l'ensemble des préparations peuvent être réalisées dans le même récipient. Il en résulte un appareil moins encombrant.

Avantageusement pour faciliter la création du vortex et améliorer la qualité du mélange l'extrémité libre de la lame est inclinée vers le bas.

Selon un mode de réalisation, l'outil de travail pour préparations liquides est associé à un dispositif accélérateur, le moyen d'entraînement entraînant un arbre d'entrée dudit dispositif, l'outil de travail étant monté sur un arbre de sortie dudit dispositif, coaxial à l'arbre d'entrée.

Avantageusement le dispositif accélérateur comporte un bâti susceptible de coopérer avec des moyens de blocage en rotation dudit bâti, un moyeu formant l'arbre de sortie, un moyen de transmission formant l'arbre d'entrée prévu pour coopérer avec le moyen d'entraînement, ledit moyen de transmission portant des planétaires montés sur des axes, lesdits planétaires coopérant d'une part avec la périphérie du moyeu et d'autre part avec une paroi intérieure du bâti.

Lorsque le dispositif accélérateur est disposé sous le récipient les moyens de blocage en rotation du bâti sont disposés sur le boîtier ou sous le récipient.

Lorsque le dispositif accélérateur est disposé dans le récipient les moyens de blocage en rotation du bâti sont disposés dans le récipient. L'ensemble de travail peut alors être solidaire du dispositif accélérateur.

Avantageusement, l'outil de travail est monté sur une couronne, ladite couronne étant montée sur le moyeu. La couronne peut être montée fixe ou amovible sur le moyeu. Cette dernière disposition permet de changer aisément d'outil de travail en conservant le même dispositif accélérateur.

Avantageusement alors, pour éviter l'intrusion de matières alimentaires dans l'ensemble de travail entre la couronne et le bâti, des premiers moyens d'étanchéité sont disposés entre la couronne et le bâti. Cette disposition permet d'améliorer le fonctionnement ainsi que la propreté de l'ensemble de travail. En l'absence de couronne les premiers moyens d'étanchéité peuvent être montés entre le moyeu et le support de l'outil de travail tournant par rapport au moyeu.

De préférence pour améliorer l'étanchéité de l'ensemble de travail des seconds moyens d'étanchéité sont disposés entre le bâti et le moyen de transmission.

Alternativement ou en complément, des troisièmes moyens d'étanchéité sont disposés entre le bâti et le récipient de travail, lesdits moyens étant montés de préférence sur le bâti. Cette disposition permet d'éviter l'intrusion de matière alimentaires entre le bâti et le récipient de travail, ce qui pourrait affecter la stabilité de l'ensemble de travail, voire l'étanchéité du récipient de travail lorsque celui comporte dans le fond une ouverture prévue pour le passage du moyen d'entraînement.

Selon une disposition préférée, le bâti forme une cloche prévue pour venir en appui sur le fond du récipient, le moyen de transmission et les planétaires étant logés sous la cloche. Ainsi le bâti protège le moyen de transmission et les planétaires. Cette disposition de prévoir les premiers moyens d'étanchéité aussi près que possible de l'axe de rotation de l'ensemble de travail. La limitation de la vitesse linéaire de frottement sur lesdits moyens d'étanchéité permet d'améliorer leur longévité.

Avantageusement alors, le bâti est monté libre en rotation sur le moyeu, le moyen de transmission étant monté libre en rotation sur la partie inférieure du moyeu, une zone dentée coopérant avec les planétaires étant prévue sur le moyeu entre le bâti et le moyen de transmission, l'outil de travail étant solidaire de la partie supérieure du moyeu. Cette disposition permet de rendre superflu les troisièmes moyens d'étanchéité. En effet les deuxièmes moyens d'étanchéité disposés entre le moyen de transmission et le bâti permettent de protéger les planétaires. L'intrusion de matière alimentaire dans l'outil de travail accéléré n'est donc pas à redouter.

Selon un autre mode de réalisation, l'outil de travail pour préparations liquides est entraîné par le moyen d'entraînement à la vitesse de rotation dudit moyen, le moteur étant associé à un variateur électronique de vitesse.

Dans l'un ou l'autre de ces modes de réalisation, le récipient de travail peut comporter un axe intermédiaire monté dans le fond dudit récipient avec un joint d'étanchéité, ledit axe étant prévu pour coopérer d'une part avec le moyen d'entraînement et d'autre part avec le moyen de transmission, ou le corps de l'ensemble de travail. Cette disposition permet d'utiliser différents ensembles de travail dans le récipient de travail, ces ensembles pouvant être aisément retirés du récipient après réalisation de la préparation.

Alternativement, le récipient de travail peut comporter une ouverture prévue pour le passage du moyen de transmission, lequel est susceptible de recevoir une pièce montée à l'extérieur du récipient et prévue pour solidariser l'ensemble de travail au récipient. Cette disposition permet d'utiliser un ensemble de travail dont le volume est minimisé.

Alternativement, le récipient de travail peut comporter une ouverture prévue pour le passage du moyen de transmission, dont l'extrémité libre est formée par des pattes de clipsage. Cette disposition permet également d'utiliser un ensemble de travail dont le volume est minimisé. De plus le retrait de l'ensemble de travail est facilité.

Alternativement, le récipient de travail peut comporter une cheminée prévue pour le passage du moyen d'entraînement et du moyen de transmission. Cette disposition permet d'utiliser différents ensembles de travail dans le récipient pouvant être retirés du récipient après réalisation de la préparation. De plus le nettoyage du récipient est facilité, car il ne demande aucun démontage.

Avantageusement des moyens d'étanchéité supérieurs sont prévus sous le couvercle pour assurer l'étanchéité avec le récipient. Cette disposition permet de réaliser des préparations liquides sans risque de débordement.

Le récipient peut par exemple comporter quatre nervures verticales.

Avantageusement encore la paroi latérale du récipient est légèrement évasée vers le haut.

Avantageusement encore la vitesse de l'extrémité de la lame s'inscrivant dans l'arrondi est supérieure à 20 m/s. Cette disposition permet d'obtenir une qualité de préparation liquide comparable à celle obtenue avec un appareil dédié aux préparations liquides dans un récipient permettant de réaliser différents types de préparations.

L'invention sera mieux comprise à l'étude d'exemples de réalisation pris à titre nullement limitatifs et illustrés dans les figures annexées dans lesquelles :
- les figure 1a, 1b et 1c sont des vues partielle en coupe et en éclaté, partielle en coupe et de dessus d'un premier exemple de réalisation d'un premier mode de réalisation d'un appareil électroménager de préparation culinaire selon l'invention,
- la figure 2 est une vue partielle en coupe et en éclaté d'un deuxième exemple du premier mode de réalisation d'un appareil selon l'invention.
- la figure 3 est une vue partielle en coupe et en éclaté d'un troisième exemple du premier mode de réalisation d'un appareil selon l'invention.
- la figure 4 est une vue partielle en coupe et en éclaté d'un quatrième exemple du premier mode de réalisation d'un appareil selon l'invention.
- la figure 5a est une vue partielle en coupe d'un cinquième exemple du premier mode de réalisation d'un appareil selon l'invention,
- la figure 5b est une vue partielle en coupe de l'appareil montré à la figure 5a, dans lequel est monté un autre accessoire,
- la figure 6a est une vue en coupe d'un récipient de travail comportant un outil de travail pour préparations liquides selon un sixième exemple de réalisation du premier mode de réalisation,
- la figure 6b est une vue de dessus du récipient montré à la figure 6a, dans lequel est disposé l'outil de travail,
- la figure 6c est une vue en coupe de l'outil de travail et du récipient montré aux figures 6a et 6b,
- la figure 7 est une vue schématique en coupe d'un deuxième mode de réalisation d'un appareil selon l'invention.

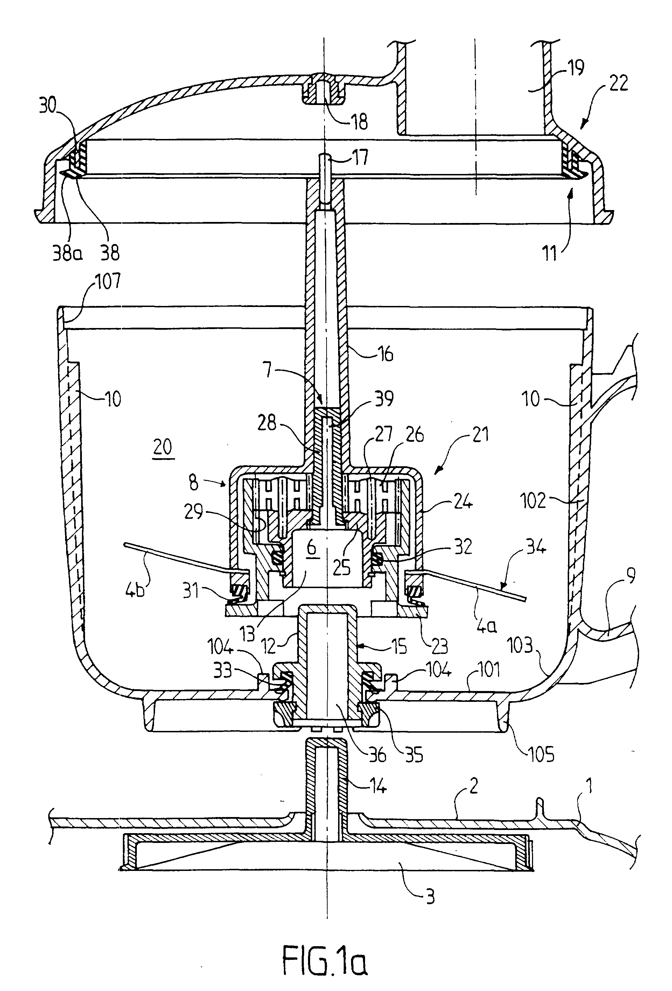

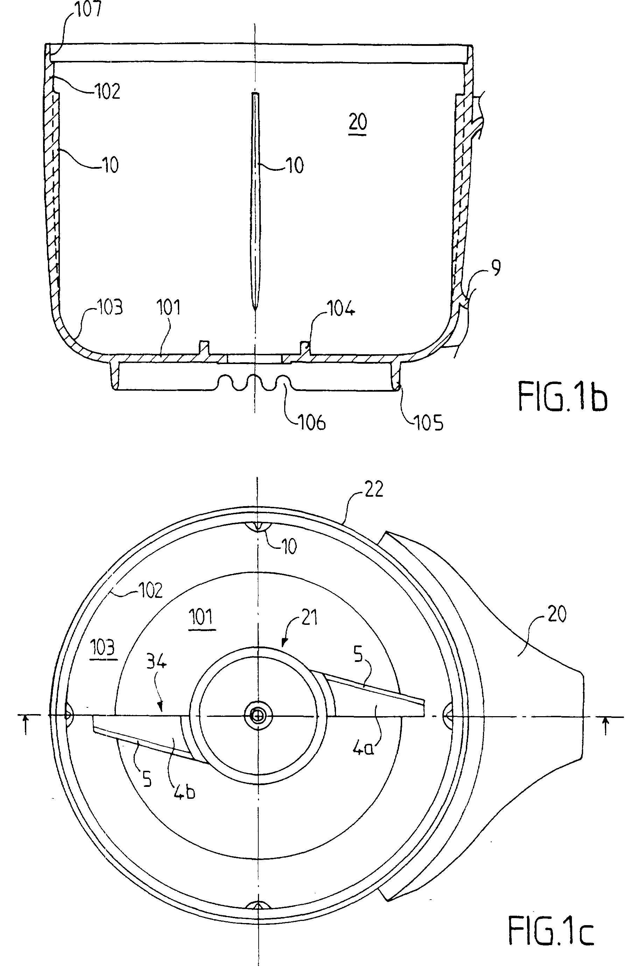

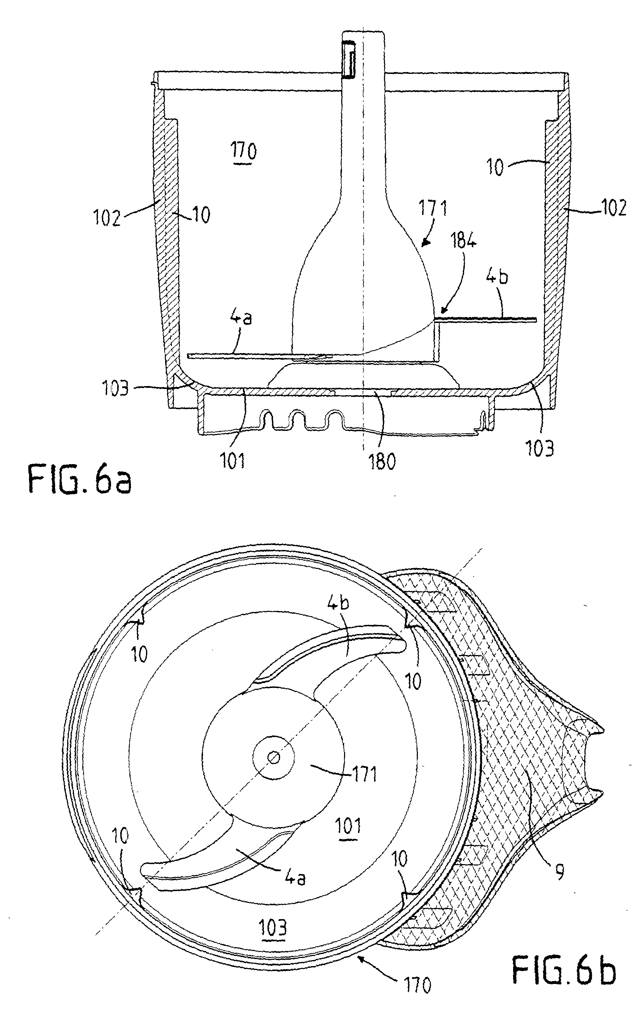

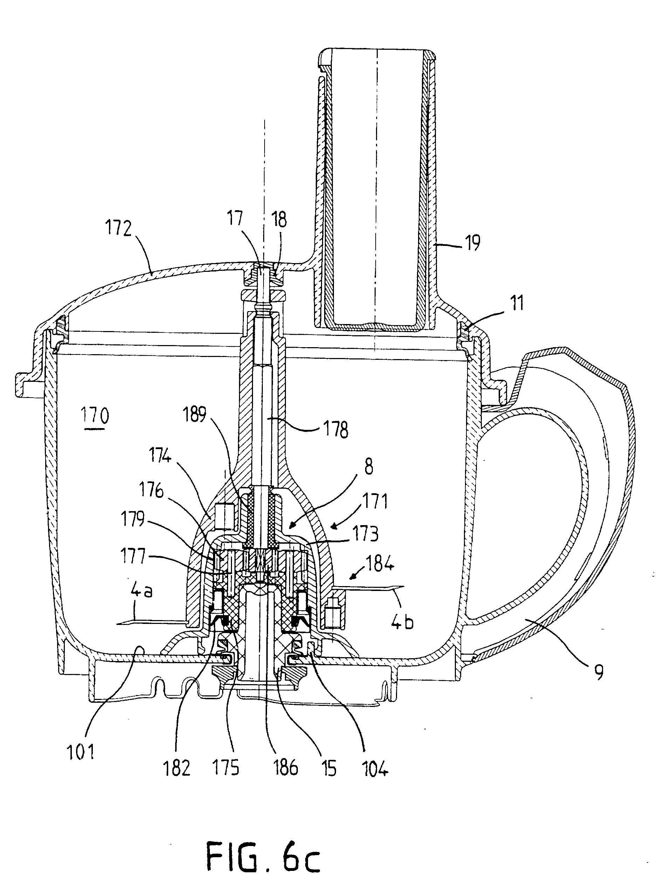

L'appareil électroménager de préparation culinaire montré à la figure 1a comporte un boîtier 1 dans lequel est monté un moteur (non représenté à la figure 1a, mais représenté sur la figure 6) associé à un moyen d'entraînement 3. L'appareil comporte également un récipient de travail 20 disposé sur un socle 2 du boîtier 1, un ensemble de travail rotatif 21 disposé dans le récipient 20, et un couvercle 22 prévu pour fermer le récipient 20. Le couvercle 22 comporte une cheminée 19 prévue pour l'introduction d'ingrédients au cours de la réalisation de la préparation. Le récipient 20 est de géométrie de révolution. Le récipient 20 comporte un fond 101 et une paroi latérale 102 légèrement évasée vers le haut. Une jupe 105 ménagée sous le fond 101 est prévue pour reposer sur le socle 2 du boîtier 1. Tel que montré à la figure 1b, la jupe 105 comporte des encoches 106 prévues pour coopérer avec des ergots issus du boîtier (non représentés à la figure) afin de bloquer en rotation le récipient 20 sur le socle 2. Des moyens de verrouillage du couvercle sur le récipient disposé sur le socle, non montrés aux figures, sont également prévus.

Avantageusement des moyens de sécurité, non montrés aux figures des exemples de réalisation du premier mode de réalisation, sont prévus pour empêcher le fonctionnement de l'appareil tant que le couvercle n'est pas verrouillé sur le récipient. De tels moyens sont déjà connus.

Selon l'invention, le fond 101 du récipient 20 est raccordé à la paroi latérale 102 par un arrondi 103 et l'ensemble de travail rotatif 21 porte un outil de travail 34 pour préparations liquides comportant une lame 4a dont l'extrémité libre s'inscrit à l'intérieur de l'arrondi 103.

L'arrondi 103 présente un rayon compris entre 1/20e et 1/4 du diamètre du fond 101 du récipient 20, de préférence entre 1/15e et 1/5e dudit diamètre et par exemple tel que représenté à la figure 1 a 1/10e dudit diamètre. Ces proportions permettent de favoriser la création du vortex et d'améliorer la qualité du mélange. Tel que bien visible à la figure 1 a, le fond 101 est sensiblement plat autour de l'ensemble de travail 21 jusqu'à l'arrondi 103.

Tel que montré aux figures 1a et 1c, l'outil de travail 34 comporte deux lames 4a, 4b planes trapézoïdales présentant un bord d'attaque affûté 5 dont l'extrémité libre est située angulairement en retard dans le sens de rotation par rapport à l'extrémité montée sur l'ensemble de travail rotatif 21. La largeur des lames 4a, 4b va décroissant vers l'extérieur. La lame 4a est inclinée vers le bas et l'autre lame 4b est inclinée vers le haut.

Selon un exemple de réalisation d'un premier mode de réalisation présenté à la figure 1a, l'outil de travail 34 est associé à un dispositif accélérateur 8 monté dans l'ensemble de travail rotatif 21. Le dispositif accélérateur 8 comporte un arbre d'entrée 6 prévu pour être entraîné par le moyen d'entraînement 3, et un arbre de sortie 7 coaxial à l'arbre d'entrée 6.

L'ensemble de travail 21 comporte un bâti 23 prévu pour reposer sur le fond 101 du récipient 20. Le bâti 23 est susceptible de coopérer avec des moyens de blocage en rotation 104 par rapport au récipient 20. Les moyens de blocage en rotation sont par exemple des tenons issus du fond 101 du récipient 20, prévus pour s'encastrer dans des encoches ménagés sous le bâti 23, tel que montré à la figure 1 a. L'ensemble de travail 21 comporte également un moyeu 28 formant l'arbre de sortie 7, et un moyen de transmission 25 formant l'arbre d'entrée 6, prévu pour coopérer avec le moyen d'entraînement 3.

Tel que montré à la figure la, le moyen d'entraînement 3 coopère avec l'arbre d'entrée 6 par l'intermédiaire d'un axe étanche 15 disposé dans le fond 101 du récipient 20.

L'axe 15 est prévu pour coopérer d'une part avec une tige carrée 14 formant le moyen d'entraînement. L'axe 15 comporte à cette effet dans sa partie inférieure une cavité 36 de section carrée. L'axe 15 est prévu d'autre part pour coopérer avec le moyen de transmission 25. L'axe 15 comporte à cet effet en sa partie supérieure une tige 12 de section carrée. Le moyen de transmission 25 comporte en sa partie inférieure une cavité 13 de section carrée prévue pour recevoir la tige 12. Un joint 33, de préférence un joint à lèvres, est monté sur l'axe 15 pour assurer une étanchéité avec le fond du récipient 20. Une pièce 35 permet d'assembler de manière démontable l'axe 15 sur le fond 101 du récipient 20, par exemple par baïonnette quart de tour. La figure 1b montre le récipient 20 sans l'axe 15. A titre de variante le joint 33 peut être monté sur le fond 101 du récipient 20.

Le moyen de transmission 25 porte des planétaires 26 montés sur des axes 27. Les planétaires 26 coopèrent d'une part avec la périphérie du moyeu 28 et d'autre part avec une paroi intérieure 29 du bâti 23. Les planétaires 26 sont avantageusement formés par des roues dentées, lesquelles coopèrent avec des surfaces dentées ménagées sur la périphérie du moyeu 28 et sur la paroi intérieure 29 du bâti 23. Le moyeu 28 est formé à l'intérieur d'une couronne extérieure 24 formant une jupe. Le moyeu 28 est monté mobile en rotation sur un axe 39 issu du moyen de transmission 25.

Un premier moyen d'étanchéité 31 est disposé entre la couronne 24 et le bâti 23. Tel que montré à la figure 1a, le premier moyen d'étanchéité 31 est formé par un joint à lèvre monté sur la jupe formant la couronne 24. Un second moyen d'étanchéité 32 est disposé entre le bâti 23 et le moyen de transmission 25. Tel que montré à la figure 1a, le second moyen d'étanchéité 32 est formé par un joint torique monté dans une rainure annulaire intérieure du bâti 23.

L'outil 34 est monté sur la couronne extérieure 24 formant une jupe à l'intérieur de laquelle est formé le moyeu 28. La couronne est prolongée à l'opposé du moyeu 28 par une tige 16 favorisant la préhension de l'ensemble de travail. La tige 16 est terminée par un pivot 17 prévu pour tourner dans une cavité 18 de la face intérieure du couvercle 22, formant ainsi un moyen de maintien axial de l'ensemble de travail 21.

Le récipient 20 comporte des nervures internes 10 ménagées sur la paroi latérale 102, destinées à favoriser le mélange des préparations liquides. Tel que montré aux figures 1b et 1c le récipient 20 comporte quatre nervures 10 de section triangulaire disposées verticalement sur la paroi 102, et réparties régulièrement. Tel que montré aux figures 1 a et 1 b l'épaisseur des nervures 10 va décroissant vers le fond 101 du récipient 20. Les nervures 10 naissent au sommet de l'arrondi 103. La largeur des nervures 10 s'élargit progressivement dans la zone de travail de l'outil 34, du fait de l'évasement de la paroi 102.

Des moyens d'étanchéité supérieurs 11 sont prévus entre le couvercle 22 et le récipient de travail 21. Les moyens d'étanchéité supérieurs 11 sont formés par un joint annulaire 38 monté sur une jupe intérieure 30 du couvercle 22. Le joint annulaire 38 présente une lèvre périphérique 38a prévue pour coopérer avec une paroi 107 du récipient 20.

A titre de variante d'autres moyens de blocage en rotation du dispositif accélérateur disposé dans le récipient de travail sont envisageables, par exemple un verrouillage à baïonnette du bâti de l'ensemble de travail sur le fond du récipient. Le maintien de la tige du moyeu de l'ensemble de travail dans le couvercle peut alors être supprimé.

Le fonctionnement de cet exemple de réalisation est le suivant. L'utilisateur dispose le récipient 20 muni de l'axe 15 sur le socle 2, installe dans le récipient 20 l'ensemble de travail 21 et les ingrédients à mélanger, puis ferme le récipient 21 avec le couvercle 22. Après mise en marche de l'appareil, le moyen de transmission 25 est entraîné par le moyen d'entraînement 3. Les planétaires 26 montés sur le moyen de transmission 25 sont entraînés en rotation par leur périphérie en contact avec le bâti 23 immobile par rapport au récipient de travail 20. Pour un tour du moyen de transmission 25 les planétaires 26 font plusieurs tours, par exemple une dizaine, le rapport dépendant des diamètres respectifs. La rotation des planétaires 26 est transmise au moyeu 28, ce qui peut augmenter encore la vitesse de rotation selon le rapport des diamètres respectifs. Par exemple la vitesse de rotation du moyen d'entraînement 3 est de l'ordre de 1750 tours par minute et la vitesse de rotation de l'ensemble de travail 21 est l'ordre de 7000 tours par minute, pour un diamètre de lames de 140 mm. La cheminée 19 peut être obturée par un poussoir (non montré aux figures) lors de la réalisation des préparations liquides. Pour réaliser d'autres types de préparations, l'utilisateur peut remplacer l'ensemble de travail 21 par d'autres types d'ensemble de travail, par exemple des ensemble de travail non accélérés tels qu'un couteau hachoir ou un disque à râpés ou émincés.

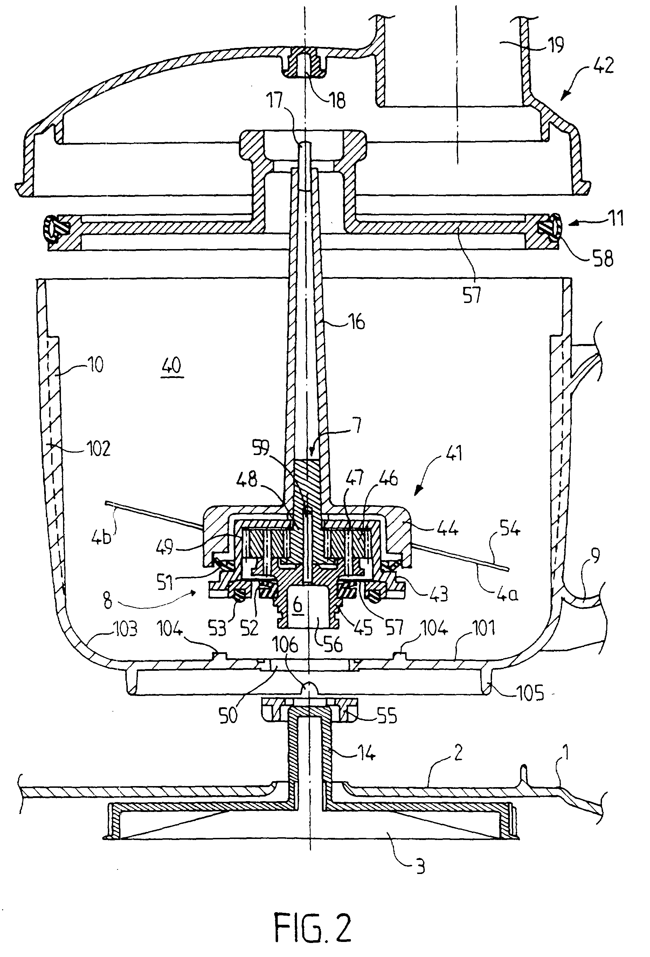

L'exemple de réalisation présenté à la figure 2 comporte également un dispositif accélérateur 8 monté dans un ensemble de travail rotatif 41. L'arbre d'entrée 6 est formé par un moyen de transmission 45. L'arbre de sortie 7 est formé par un moyeu 48.

Cet exemple de réalisation diffère de l'exemple de réalisation précédent en ce que l'ensemble de travail 41 est monté sur le fond 101 d'un récipient 40 à travers une ouverture 50 prévue pour le passage du moyen de transmission 45, et en ce que l'ensemble de travail 41 comporte un bâti 43 formant une cloche prévue pour venir en appui sur le fond du récipient 40. Le moyen de transmission 45 et les planétaires 46 sont logés sous la cloche.

Le moyen de transmission 45 comporte une cavité de section carrée 56 prévue pour recevoir la tige carrée 14 du moyen d'entraînement 3. Une pièce 55 est montée à l'extérieur du récipient 40 pour solidariser l'ensemble de travail 41 audit récipient, le moyen de transmission 45 restant mobile en rotation.

Le moyeu 48 est monté mobile en rotation sur un axe 59 issu du moyen de transmission 45. Le moyen de transmission 45 porte des planétaires 46 montés sur des axes 47. Les planétaires 46 coopèrent d'une part avec la périphérie du moyeu 48 et d'autre part avec une paroi intérieure 49 du bâti 43. Le bâti 43 est prévu pour reposer sur le fond 101 du récipient 40 et coopère avec des moyens de blocage en rotation 104. Un outil 54 est monté sur une couronne extérieure 44 du moyeu 48.

Un premier moyen d'étanchéité 51 est disposé entre la couronne 44 et le bâti 43. Tel que montré à la figure 2, le premier moyen d'étanchéité 51 est formé par un joint à lèvres monté sur le bâti 43. Un second moyen d'étanchéité 52 est disposé entre le bâti 43 et le moyen de transmission 45. Tel que montré à la figure 2, le second moyen d'étanchéité 52 est formé par un joint à lèvres monté sur le moyen de transmission 45 et coopérant avec un anneau 57 monté sur le bâti 43. Un troisième moyen d'étanchéité 53 est disposé entre le bâti 43 et le récipient de travail 42. Tel que montré à la figure 2, le troisième moyen d'étanchéité 53 est formé par un joint annulaire monté dans la partie inférieure du bâti 43.

Les moyens d'étanchéité supérieurs 11 sont formés par un joint torique 58 monté sur une platine 57 insérée entre le récipient 40 et un couvercle 42.

Le fonctionnement de cet exemple de réalisation diffère du premier mode de réalisation en ce que l'utilisateur doit d'abord vider le récipient 40 avant de démonter l'ensemble de travail 41, et en ce que la présence de la platine 57 rendu superflu l'utilisation d'un poussoir pour obturer la cheminée 19 lors de la réalisation de préparations liquides.

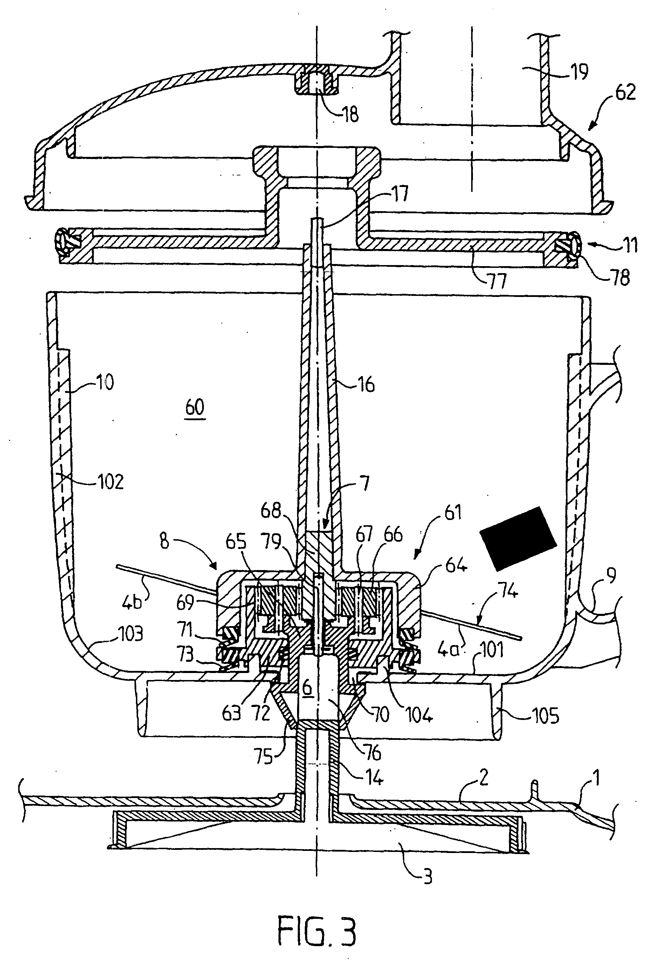

L'exemple de réalisation présenté à la figure 3 comporte également un dispositif accélérateur 8 monté dans un ensemble de travail rotatif 61. L'arbre d'entrée 6 est formé par un moyen de transmission 65. L'arbre de sortie 7 est formé par un moyeu 68. Le moyen de transmission 65 comporte une cavité de section carrée 76 prévue pour recevoir la tige carrée 14 du moyen d'entraînement 3. L'ensemble de travail 61 est monté sur le fond 101 d'un récipient 60 à travers une ouverture 50 prévue pour le passage du moyen de transmission 45. Tel que bien visible à la figure 3 les nervures 10 s'étendent dans la zone de travail de la lame supérieure 4b.

Cet exemple de réalisation diffère de l'exemple de réalisation précédent en ce que l'extrémité libre du moyen de transmission 65 est formée par des pattes de clipsage 75 prévues pour s'accrocher sur le dessous du récipient 60, le moyen de transmission 65 étant mobile en rotation.

Le moyeu 68 est monté mobile en rotation sur un axe 79 issu du moyen de transmission 65. Le moyen de transmission 65 porte des planétaires 66 montés sur des axes 67. Les planétaires 66 coopèrent d'une part avec la périphérie du moyeu 68 et d'autre part avec une paroi intérieure 69 d'un bâti 63. Le bâti 63 est prévu pour reposer sur le fond 101 du récipient 60 et coopère avec des moyens de blocage en rotation 104. Un outil 74 est monté sur une couronne extérieure 64 du moyeu 68.

Un premier moyen d'étanchéité 71 est disposé entre la couronne 64 et le bâti 63. Tel que montré à la figure 3, le premier moyen d'étanchéité 71 est formé par un joint à lèvres monté sur la couronne 64. Un second moyen d'étanchéité 72 est disposé entre le bâti 63 et le moyen de transmission 65. Tel que montré à la figure 3, le second moyen d'étanchéité 72 est formé par un joint annulaire monté sur le bâti 63. Un troisième moyen d'étanchéité 73 est disposé entre le bâti 63 et le récipient de travail 60. Tel que montré à la figure 3, le troisième moyen d'étanchéité 73 est formé par un joint à lèvres monté dans la partie inférieure du bâti 63.

Les moyens d'étanchéité supérieurs 11 sont formés par un joint torique 78 monté sur une platine 77 insérée entre le récipient 60 et un couvercle 62.

Le fonctionnement de cet exemple de réalisation diffère de l'exemple de réalisation précédent en ce que le montage de l'ensemble de travail 61 dans le récipient de travail 60 s'effectue en insérant les pattes 75 dans l'ouverture 70.

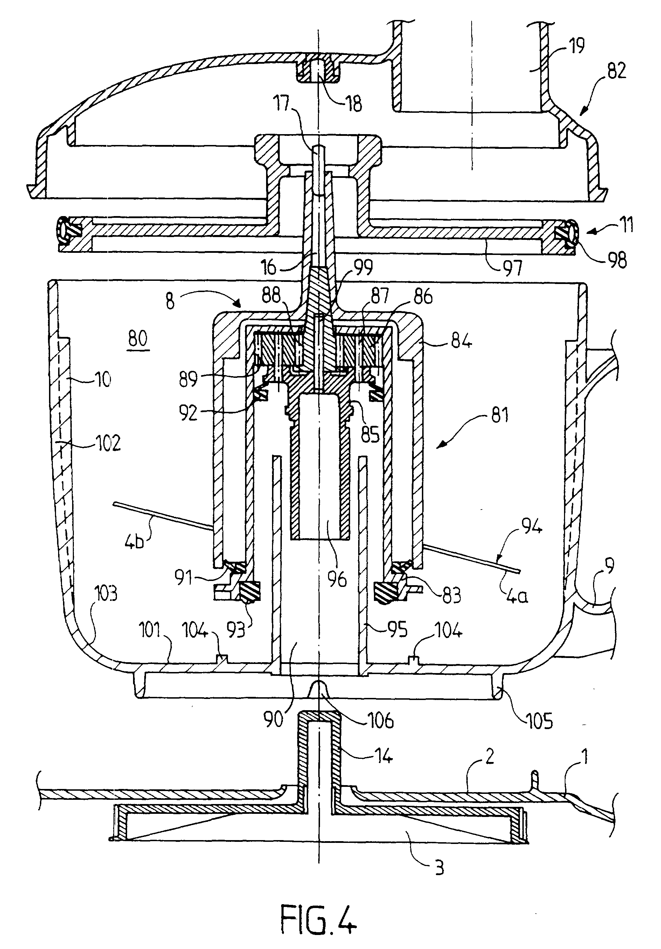

L'exemple de réalisation présenté à la figure 4 comporte également un dispositif accélérateur 8 monté dans un ensemble de travail rotatif 81. L'arbre d'entrée 6 est formé par un moyen de transmission 85. L'arbre de sortie 7 est formé par un moyeu 88. Le moyen de transmission 85 comporte une cavité de section carrée 96 prévue pour recevoir la tige carrée 14 du moyen d'entraînement 3.

Cet exemple de réalisation diffère de l'exemple de réalisation précédent en ce que le fond 101 d'un récipient de travail 80 comporte une cheminée 90 prévue pour le passage du moyen d'entraînement 3 et du moyen de transmission 85. Par ailleurs l'ensemble de travail 81 comporte un bâti 83 formant une cloche prévue pour venir en appui sur le fond du récipient 80. Le moyen de transmission 85 et les planétaires 86 sont logés sous la cloche

Le moyeu 88 est monté mobile en rotation sur un axe 99 issu du moyen de transmission 85. Le moyen de transmission 85 porte des planétaires 86 montés sur des axes 87. Les planétaires 86 coopèrent d'une part avec la périphérie du moyeu 88 et d'autre part avec une paroi intérieure 89 d'un bâti 83. Le bâti 63 est prévu pour reposer sur le fond 101 du récipient 80 et coopère avec des moyens de blocage en rotation 104. Un outil 94 est monté sur une couronne extérieure 84 du moyeu 88.

Un premier moyen d'étanchéité 91 est disposé entre la couronne 84 et le bâti 83. Tel que montré à la figure 4, le premier moyen d'étanchéité 91 est formé par un joint à lèvres monté sur la périphérie du bâti 83. Un second moyen d'étanchéité 92 est disposé entre le bâti 83 et le moyen de transmission 85. Tel que montré à la figure 4, le second moyen d'étanchéité 92 est formé par un joint à lèvres monté sur le bâti 83. Un troisième moyen d'étanchéité 93 est disposé entre le bâti 83 et le fond du récipient de travail 82. Tel que montré à la figure 4, le troisième moyen d'étanchéité 93 est formé par un joint annulaire monté dans la partie inférieure du bâti 83.

A titre de variante le troisième moyen d'étanchéité 93 peut être disposé entre le bâti 83 et la cheminée 90 issue du récipient de travail 80. A titre de variante également Les moyens de blocage 104 en rotation du bâti 83 par rapport au récipient 80 peuvent être formés sur la cheminée 90, par exemple sur la partie supérieure de la cheminée 90.

Les moyens d'étanchéité supérieurs 11 sont formés par un joint torique 98 monté sur une platine 97 insérée entre le récipient 80 et un couvercle 82.

Le fonctionnement de cet exemple de réalisation diffère de celui de l'exemple de réalisation précédent en ce que l'ensemble de travail 81 peut être retiré du récipient 80 après la réalisation de la boisson.

L'exemple de réalisation montré à la figure 5a diffère des exemples de réalisation précédents en ce que le dispositif accélérateur 8 est formé par un ensemble accélérateur 120 disposé sous un récipient de travail 110. L'ensemble accélérateur 120 est logé dans une dépression 126 ménagée dans le socle 2 du boîtier 1.

Le moyen d'entraînement 3 coopère avec l'arbre d'entrée 6 du dispositif accélérateur 8 et l'arbre de sortie 7 du dispositif accélérateur 8 entraîne un ensemble de travail 111.

L'ensemble de travail 111 comporte un corps 121 terminé par un pivot 17 s'insérant dans une cavité 18 d'un couvercle 112. Un outil de travail 124 formé de deux lames 4a, 4b est monté sur le corps 121. L'extrémité inférieure du corps 121 est montée sur le fond 101 du récipient 110 à travers une ouverture 127 et est assemblée de manière démontable par une pièce 125. Un joint 123 est prévu pour assurer l'étanchéité entre le fond 101 et le corps 121. Tel que montré à la figure 5a, le joint 123 est un joint à lèvres monté sur le corps 121. Le corps 121 présente une cavité axiale 128 dans laquelle vient s'insérer l'arbre de sortie 7.

L'ensemble accélérateur 120 comporte un bâti 113 dans lequel est logé un moyen de transmission 115 portant des planétaires 116 montés sur des axes 117. Le moyen de transmission 115 est prévu pour coopérer avec le moyen d'entraînement 3 et forme l'arbre d'entrée 6. Un moyeu 118 est monté libre en rotation au dessus du moyen de transmission 115. Les planétaires 116 coopèrent d'une part avec la périphérie du moyeu 118 et d'autre part avec une paroi intérieure 119 du bâti 113. Le moyeu 118 est prévu pour s'engager dans la cavité axiale 128, et forme l'arbre de sortie 7. Tel que montré à la figure 5a, le bâti coopère avec des moyens de blocage en rotation 104 disposés sur le boîtier 1. A titre de variante les moyens de blocage en rotation peuvent être prévus sous le récipient 110.

Le fonctionnement de cet exemple de réalisation est comparable à celui du deuxième exemple de réalisation. L'installation du dispositif accélérateur 8 sous le récipient 110 permet d'augmenter le volume disponible dans ledit récipient . A titre de variante, un axe étanche 15, des pattes de clipsage 75 ou une cheminée 90 peuvent être également prévus.

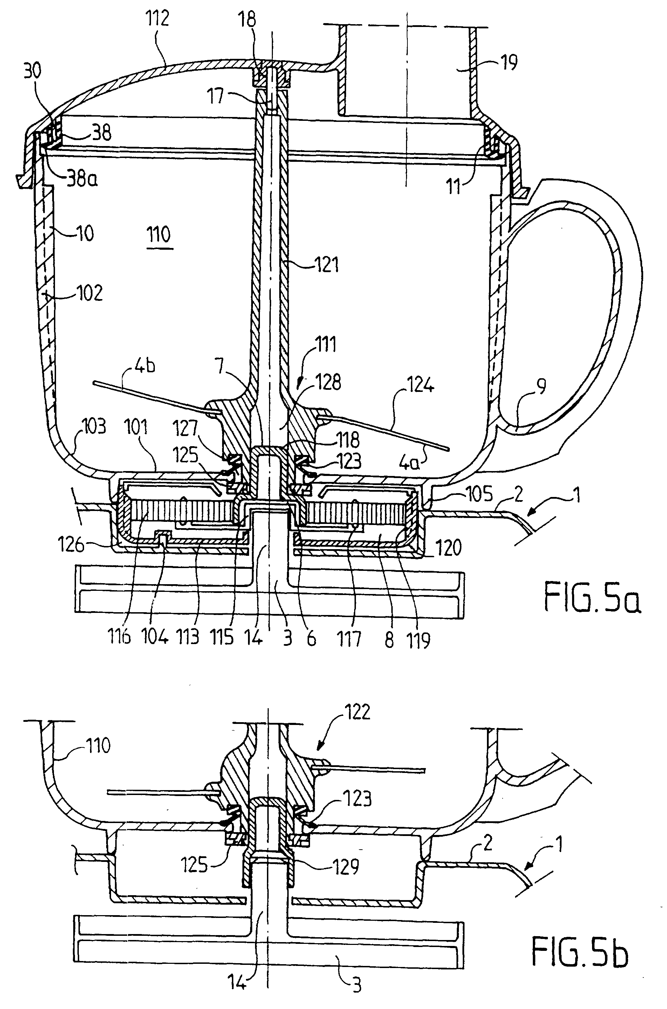

La figure 5b montre le récipient de travail 110 disposé sur le socle 2 du boîtier 1. L'ensemble accélérateur 120 a été remplacé par une pièce de liaison 129 entre le moyen d'entraînement 3 et un ensemble de travail 122.

La figure 6a montre un autre exemple de réalisation dans lequel l'ensemble de travail 171 comporte un outil de travail 184 présentant deux lames 4a, 4b horizontales décalées. L'extrémité libre de la lame inférieure 4a s'inscrit à l'intérieur de l'arrondi 103 du récipient 170. Le fond 101 du récipient 170 est plat et comporte une ouverture centrale 180 prévue pour le passage de la transmission ainsi que des butées pour le blocage de l'ensemble de travail 171, mieux visibles à la figure 6c. Les nervures 10 s'étendent dans la zone de travail de l'outil de travail 184. L'extrémité inférieure des nervures 10 se termine dans l'arrondi 103. La paroi latérale 102 du récipient est légèrement évasée vers le haut, cet évasement étant plus prononcé dans la zone adjacente à l'arrondi 103. Le rayon de l'arrondi 103 est de 1/8 du diamètre intérieur du récipient 170.

Tel que mieux visible à la figure 6b les nervures 10 sont de section triangulaire.

La hauteur des nervures 10 est comprise entre 1,2% du diamètre intérieur du récipient 170 au niveau de la lame inférieure 4a et 3,2% au sommet des nervures. A titre de variante, cette hauteur peut être comprise entre 1 % et 4%. La distance entre l'extrémité de la lame 4a et le sommet des nervures 10 est de l'ordre de 1/50 du diamètre intérieur du récipient 170. A titre de variante, cette distance peut être inférieure, jusqu'à 1/100 dudit diamètre, voire supérieure sans dépasser 1/20 dudit diamètre.

La figure 6c montre le détail de la construction de l'ensemble de travail 171. Le récipient de travail 170 est équipé d'un axe de transmission étanche 15 comparable à celui décrit dans le premier exemple de réalisation. Le couvercle 172 comporte des moyens de guidage 18 de l'ensemble de travail 171 ainsi qu'une cheminée 19 d'introduction des ingrédients et des moyens d'étanchéité 11 avec le récipient, formés par un joint d'étanchéité à lèvres.

L'ensemble de travail 171 présente une construction voisine de l'ensemble de travail 41 du deuxième exemple de réalisation. L'outil de travail 184 est associé à un dispositif accélérateur 8 monté dans l'ensemble de travail rotatif 171. Le dispositif accélérateur 8 comporte un arbre d'entrée prévu pour être entraîné par le moyen d'entraînement formé par l'axe 15 et un arbre de sortie coaxial à l'arbre d'entrée.

L'ensemble de travail 171 comporte un bâti 173 en forme de cloche prévu pour reposer sur le fond 101 du récipient 170. Le bâti 173 est susceptible de coopérer avec des moyens de blocage en rotation 104 par rapport au récipient 170. L'ensemble de travail 171 comporte également un moyeu 178 formant l'arbre de sortie 7, et un moyen de transmission 175 formant l'arbre d'entrée, prévu pour coopérer avec l'axe 15. Le moyen de transmission 175 portant des planétaires 176 montés sur des axes 177 est logé sous la cloche formée par le bâti 173. Les planétaires 26 coopèrent d'une part avec une zone périphérique dentée du moyeu 178 et d'autre part avec une paroi intérieure dentée 179 du bâti 23. Le bâti 173 est solidaire d'un palier 189 dans lequel tourne le moyeu 178. Au dessus du palier 189 le moyeu 178 est monté à l'intérieur d'une couronne extérieure 174 formant une jupe, portant les lames 4a, 4b. En dessous du palier 189 est formé le pignon denté 186 coopérant avec les planétaires 176. Les planétaires 176 coopèrent également avec une paroi intérieure dentée 179 du bâti 173. Le moyen de transmission 175 est monté libre en rotation sous le pignon 186. L'extrémité supérieure 17 du moyeu 178 est montée libre en rotation dans une cavité 18 formée sur la face inférieure du couvercle 172.

Le premier moyen d'étanchéité est formé par le palier 189 monté entre la couronne 174 et le bâti 173. Le second moyen d'étanchéité 182 est formé par un joint à lèvres disposé entre le bâti 173 et le moyen de transmission 175.

Le fonctionnement de cet exemple de réalisation est comparable à celui du premier exemple. L'utilisateur dispose dans le récipient de travail l'ensemble de travail adapté au type de préparation souhaité, et peut le retirer sans manoeuvre particulière.

Grâce à l'accélérateur 8 les lames 4a, 4b peuvent atteindre une vitesse supérieure à 20 m/s à leur extrémité. Les diamètres des planétaires 176 et du pignon 186 étant voisins, le rapport d'accélération est ainsi de 4. Une vitesse de sortie de 900 tours/minute utilisée pour la fonction hachoir peut ainsi être convertie en une vitesse de 3600 tours/minute pour les préparations liquides avec l'accessoire accéléré.

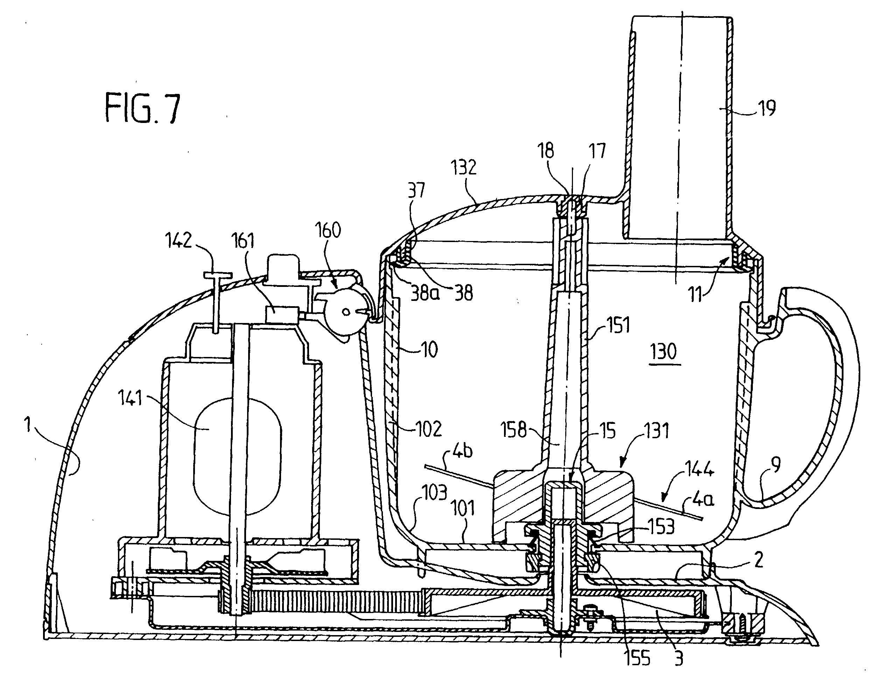

La figure 7 montre un deuxième mode de réalisation dans lequel l'appareil comporte un moteur 141 coopérant avec des moyens de commande de la vitesse 142, par exemple un variateur électronique de vitesse, prévus pour fournir au moyen d'entraînement 3 une vitesse adaptée à un ensemble de travail 131 disposé dans un récipient 130.

L'ensemble de travail 131 comporte un corps 151 terminé par un pivot 17 s'insérant dans une cavité 18 d'un couvercle 132. Un outil de travail 144 formé de deux lames 4a, 4b est monté sur le corps 151.

Le récipient de travail 130 comporte un axe 15 prévu pour coopérer d'une part avec le moyen d'entraînement 3 et d'autre part avec l'ensemble de travail 131. Le corps 151 présente à cet effet une cavité axiale 158 prévue pour recevoir l'axe 15. Un joint 153 est prévu pour assurer l'étanchéité entre le fond 101 du récipient 130 et l'axe 15.

A titre de variante, le montage de l'ensemble de travail dans une ouverture 50 du récipient, des pattes de clipsage 75 ou une cheminée 90 peuvent être également prévus.

Dans ce mode de réalisation, l'utilisateur monte dans le récipient 130 l'outil de travail adapté au type de préparation. Les moyens de commande 142 permettent de régler la vitesse du moteur 141 adaptée à l'outil.

De nombreuses améliorations peuvent être apportées à cet appareil et à cet accessoire dans le cadre des revendications.

Notamment, dans les exemples de réalisation 1 à 5 l'outil de travail peut être monté amovible sur l'accélérateur 8. Il est ainsi possible de prévoir plusieurs outils de travail utilisés avec un même moyeu accélérateur disposé dans le récipient de travail.

La présente invention trouve son application dans le domaine des appareils électroménagers de préparation culinaire, notamment dans les appareils multifonctions comportant une seule sortie d'entraînement tournant à une vitesse insuffisante pour réaliser des préparations liquides de manière satisfaisante.

## Revendications

1. Appareil électroménager de préparation culinaire comportant un boîtier (1), un récipient de travail (20, 40, 60, 80, 110, 130, 170) de géométrie de révolution, monté sur le boîtier, le récipient de travail présentant un fond (101) raccordé à des parois latérales (102) par un arrondi (103) concave, le rayon de l'arrondi étant compris entre 1/12 et 1/6 du diamètre intérieur du récipient de travail, un couvercle (22, 42, 62, 82, 112, 132, 172) étant prévu pour fermer le récipient de travail, le boîtier comprenant un moteur (141) associé à un moyen d'entraînement (3) prévu pour entraîner un ensemble de travail (21, 41, 61, 81, 111, 131, 171) rotatif disposé dans le récipient de travail, le fond du récipient de travail étant sensiblement plat autour de l'ensemble de travail, l'ensemble de travail portant un outil de travail (34, 54, 74, 94, 124, 144, 184) pour préparations liquides comportant une lame (4a), le récipient de travail comportant au moins une nervure (10) de section triangulaire s'étendant au moins partiellement dans la zone de travail de l'outil de travail, **caractérisé en ce que** l'ensemble de travail (21, 41, 61, 81, 111, 131, 171) est amovible par rapport au fond (101) du récipient de travail (20, 40, 60, 80, 110, 130, 170), le couvercle (22, 42, 62, 82, 112, 132, 172) comportant des moyens de guidage (18) de l'ensemble de travail (21, 41, 61, 81, 111, 131, 171), la hauteur de la ou des nervures (10) étant comprise entre 1 % et 4% du diamètre intérieur du récipient de travail (20, 40, 60, 80, 110, 130, 170), la distance entre l'extrémité de la lame (4a) et le sommet de la ou des nervures (10) étant comprise entre 1/20 et 1/100 du diamètre intérieur du récipient de travail (20, 40, 60, 80, 110, 130, 170), la lame (4a) étant plane et présentant une extrémité libre s'inscrivant à l'intérieur de l'arrondi (103) lorsque l'ensemble de travail (21, 41, 61, 81, 111, 131, 171) comportant l'outil de travail (34, 54, 74, 94, 124, 144, 184) est en place dans le récipient de travail (20, 40, 60, 80, 110, 130, 170).

2. Appareil selon la revendication 1, **caractérisé en ce que** l'extrémité libre de la lame (4a) est inclinée vers le bas.

3. Appareil selon l'une des revendications 1 ou 2, **caractérisé en ce que** l'outil de travail (34, 54, 74, 94, 124, 184) est associé à un dispositif accélérateur (8), le moyen d'entraînement (3) entraînant un arbre d'entrée (6) dudit dispositif, l'outil de travail (34, 54, 74, 94, 124, 184) étant monté sur un arbre de sortie (7) dudit dispositif, coaxial à l'arbre d'entrée.

4. Appareil selon la revendication 3, **caractérisé en ce que** le dispositif accélérateur (8) comporte un bâti (23, 43, 63, 83, 113, 173) susceptible de coopérer avec des moyens de blocage en rotation (104) dudit bâti, un moyeu (28, 48, 68, 88, 118, 178) formant l'arbre de sortie (7), un moyen de transmission (25, 45, 65, 85, 115, 175) formant l'arbre d'entrée (6) prévu pour coopérer avec le moyen d'entraînement (3), ledit moyen de transmission portant des planétaires (26, 46, 66, 86, 116, 176) montés sur des axes (27, 47, 67, 87, 117, 177), lesdits planétaires coopérant d'une part avec la périphérie du moyeu et d'autre part avec une paroi intérieure du bâti.

5. Appareil selon la revendication 4, **caractérisé en ce que** le dispositif accélérateur (8) est disposé sous le récipient (110) et **en ce que** les moyens de blocage en rotation (104) du bâti (113) sont disposés sur le boîtier (1) ou sous le récipient.

6. Appareil selon la revendication 4, **caractérisé en ce que** le dispositif accélérateur (8) est disposé dans le récipient (20, 40, 60, 80, 170) et **en ce que** les moyens de blocage en rotation (104) du bâti (23, 43, 63, 83, 173) sont disposés dans le récipient.

7. Appareil selon la revendication 6, **caractérisé en ce que** l'ensemble de travail (21, 41, 61, 81, 171) est solidaire du dispositif accélérateur (8).

8. Appareil selon l'une des revendications 6 ou 7, **caractérisé en ce que** l'outil de travail (34, 54, 74, 94, 184) est monté sur une couronne (24, 44, 64, 84, 174), ladite couronne étant montée sur le moyeu (28, 48, 68, 88, 178).

9. Appareil selon la revendication 8, **caractérisé en ce que** des premiers moyens d'étanchéité (31, 51, 71, 91, 189) sont disposés entre la couronne (24, 44, 64, 84, 174) et le bâti (23, 43, 63, 83, 173).

10. Appareil selon l'une des revendications 6 à 9, **caractérisé en ce que** des seconds moyens d'étanchéité (32, 52, 72, 92, 182) sont disposés entre le bâti (23, 43, 63, 83, 173) et le moyen de transmission (25, 45, 65, 85, 175).

11. Appareil selon l'une des revendications 6 à 10, **caractérisé en ce que** des troisièmes moyens d'étanchéité (53, 73, 93) sont disposés entre le bâti (43, 63, 83) et le récipient de travail (40, 60, 80), lesdits moyens étant montés de préférence sur le bâti).

12. Appareil selon l'une des revendications 6 à 11, **caractérisé en ce que** le bâti (43, 83, 173) forme une cloche prévue pour venir en appui sur le fond (101) du récipient (40, 80, 170), le moyen de transmission (45, 85, 175) et les planétaires (46, 86, 176) étant logés sous la cloche.

13. Appareil selon la revendication 12, **caractérisé en ce que** le bâti (43, 83, 173) est monté libre en rotation sur le moyeu (48, 88, 178), le moyen de transmission (45, 85, 175) étant monté libre en rotation sur la partie inférieure du moyeu, une zone dentée coopérant avec les planétaires (46, 86, 176) étant prévue sur le moyeu entre le bâti et le moyen de transmission, l'outil de travail (54, 94, 184) étant solidaire de la partie supérieure du moyeu.

14. Appareil selon l'une des revendications 1 ou 2, **caractérisé en ce que** l'outil de travail (144) est entraîné par le moyen d'entraînement (3) à la vitesse de rotation dudit moyen, le moteur (141) étant associé à un variateur électronique de vitesse.

15. Appareil selon l'une des revendications 1 à 14, **caractérisé en ce que** le récipient de travail (20, 130, 170) comporte un axe intermédiaire (15) monté dans le fond (102) dudit récipient avec un joint d'étanchéité (33, 153), ledit axe étant prévu pour coopérer d'une part avec le moyen d'entraînement (3) et d'autre part avec le moyen de transmission (25, 175), ou le corps (151) de l'ensemble de travail (21, 131, 171).

16. Appareil selon l'une des revendications 1 à 15, **caractérisé en ce que** des moyens d'étanchéité supérieurs (11) sont prévus sous le couvercle (22, 42, 62, 82, 112, 132, 172) pour assurer l'étanchéité avec le récipient (20, 40, 60, 80, 110, 130, 170).

17. Appareil selon l'une des revendications 1 à 16, **caractérisé en ce que** la paroi latérale (102) est légèrement évasée vers le haut.

18. Appareil selon l'une des revendications 1 à 17, **caractérisé en ce que** la vitesse de l'extrémité de la lame (4a) est supérieure à 20 m/s.

## Claims

1. A domestic electrical appliance for preparing food, the appliance comprising a housing (1), a circularly symmetrical working receptacle (20, 40, 60, 80, 110, 130, 170) mounted on the housing, the working receptacle presenting a bottom (101) connected to side walls (102) by a concave rounded portion (103), the radius of the rounded portion lying in the range 1/12th to 1/6th the inside diameter of the working receptacle, a lid (22, 42, 62, 82, 112, 132, 172) being provided to close the working receptacle, the housing containing a motor (141) associated with drive means (3) for driving a rotary working assembly (21, 41, 61, 81, 111, 131, 171) disposed in the working receptacle, the bottom of the working receptacle being substantially flat around the working assembly, the working assembly carrying a liquid-preparation working tool (34, 54, 74, 94, 124, 144, 184) comprising a blade (4a), the working receptacle including at least one rib (10) of triangular section extending at least in part in the working zone of the working tool, the additive being **characterized in that** the working assembly (21, 41, 61, 81, 111, 131, 171) is removable from the bottom (101) of the working receptacle (20, 40, 60, 80, 110, 130, 170), the lid (22, 42, 62, 82, 112, 132, 172) including guide means (18) for guiding the working assembly (21,41,61,81,111,131,171), the height of the rib(s) (10) lying in the range 1% to 4% of the inside diameter of the working receptacle (20, 40, 60, 80, 110, 130, 170), the distance between the end of the blade (4a) and the top(s) of the rib(s) (10) lying in the range 1/20th to 1/100th of the inside diameter of the working receptacle (20, 40, 60, 80, 110, 130, 170), the blade (4a) being plane, and presenting a free end that is inscribed within the rounded portion (103) when the working assembly (21, 41, 61, 81, 111, 131, 171) including the working tool (34, 54, 74, 94, 124, 144, 184) is in place in the working receptacle (20, 40, 60, 80, 110, 130, 170).

2. An appliance according to claim 1, **characterized in that** the free end of the blade (4a) slopes downwards:

3. An appliance according to claim 1 or claim 2, **characterized in that** the working tool (34, 54, 74, 94, 124, 184) is associated with an accelerator device (8), the drive means (3) driving an inlet shaft (6) of said device, the working tool (34, 54, 74, 84, 124, 184) being mounted on an outlet shaft (7) of said device lying on the same axis as the inlet shaft.

4. An appliance according to claim 3, **characterized in that** the accelerator device (8) comprises a structure (23, 43, 63, 83, 113, 173) suitable for co-operating with means (104) for preventing said structure from rotating, a hub (28, 48, 68, 88, 118, 178) forming the outlet shaft (7), transmission means (25, 45, 65, 85, 115, 175) forming the inlet shaft (6) designed to co-operate with the drive means (3), said transmission means carrying planet gears (26, 46, 66, 86, 116, 176) mounted on axes (27, 47, 67, 87, 117, 177), said planet gears co-operating firstly with the periphery of the hub and secondly with an inside wall of the structure.

5. An appliance according to claim 4, **characterized in that** the accelerator device (8) is disposed beneath the receptacle (110), and **in that** the means (104) for preventing the structure (113) from rotating are disposed on the housing (1) or beneath the receptacle.

6. An appliance according to claim 4, **characterized in that** the accelerator device (8) is disposed in the receptacle (20, 40, 60, 80, 170), and **in that** the means (104) for preventing the structure (23, 43, 63, 83, 173) from rotating are disposed inside the receptacle.

7. An appliance according to claim 6, **characterized in that** the working assembly (21, 41, 61, 81, 171) is secured to the accelerator device (8).

8. An appliance according to claim 6 or claim 7, **characterized in that** the working tool (34, 54, 74, 94, 184) is mounted on a ring (24, 44, 64, 84, 174), said ring being mounted on the hub (28, 48, 68, 88, 178).

9. An appliance according to claim 8, **characterized in that** first sealing means (31, 51, 71, 91, 189) are placed between the ring (24, 44, 64, 84, 174) and the structure (23, 43, 63, 83, 173).

10. An appliance according to any one of claims 6 to 9, **characterized in that** second sealing means (32, 52, 72, 92, 182) are disposed between the structure (23, 43, 63, 83, 173) and the transmission means (25, 45, 65, 85, 175).

11. An appliance according to any one of claims 6 to 10, **characterized in that** third sealing means (53, 73, 93) are disposed between the structure (43, 63, 83) and the working receptacle (40, 60, 80), said means preferably being mounted on the structure.

12. An appliance according to any one of claims 6 to 11, **characterized in that** the structure (43, 83, 173) forms a bell designed to press against the bottom (101) of the receptacle (40, 80, 170), the transmission means (45, 85, 175) and the planet gears (46, 86, 176) being housed under the bell.

13. An appliance according to claim 12, **characterized in that** the structure (43, 83, 173) is mounted to rotate freely on the hub (48, 88, 178), the transmission means (45, 85, 175) being mounted to rotate freely on the bottom portion of the hub, a toothed zone co-operating with the planet gears (46, 86, 176) being provided on the hub between the structure and the transmission means, the working tool (54, 94, 184) being secured to the top portion of the hub.

14. An appliance according to claim 1 or claim 2, **characterized in that** the working tool (144) is driven by drive means (3) at the speed of rotation of said means, the motor (141) being associated with an electronic speed controller.

15. An appliance according to any one of claims 1 to 14, **characterized in that** the working receptacle (20, 130, 170) includes an intermediate shaft (15) mounted in the bottom (102) of said receptacle with a sealing gasket (33, 153), said shaft being designed to co-operate firstly with the drive means (3) and secondly with the transmission means (25, 175) or the body (151) of the working assembly (21, 131, 171).

16. An appliance according to any one of claims 1 to 15, **characterized in that** top sealing means (11) are provided beneath the lid (22, 42, 62, 82, 112, 132, 172) to seal it to the receptacle (20, 40, 60, 80, 110, 130, 170).

17. An appliance according to any one of claims 1 to 16, **characterized in that** the side wall (102) is slightly upwardly flared.

18. An appliance according to any one of claims 1 to 17, **characterized in that** the speed of the end of the blade (4a) is greater than 20 meters per second (m/s).

## Patentansprüche

1. Elektrisches Haushaltsgerät zur Nahrungszubereitung, aufweisend ein Gehäuse (1), einen Arbeitsbehälter (20, 40, 60, 80, 110, 130, 170) mit Rotationsgeometrie, welcher auf dem Gehäuse befestigt ist, wobei der Arbeitsbehälter einen Boden (101) aufweist, der mit Seitenwänden (102) über eine konkave Abrundung (103) verbunden ist, wobei der Radius der Abrundung zwischen 1/12 und 1/6 des Innendurchmessers des Arbeitsbehälters beträgt, wobei ein Deckel (22, 42, 62, 82, 112, 132, 172) zum Schließen des Arbeitsbehälters vorgesehen ist, wobei das Gehäuse einen Motor (141) aufweist, welchem ein Antriebsmittel (3) zugeordnet ist, welches zum Antreiben einer drehbaren Arbeitsbaugruppe (21, 41, 61, 81, 111, 131, 171) vorgesehen ist, die im Arbeitsbehälter angeordnet ist, wobei der Boden des Arbeitsbehälters um die Arbeitsbaugruppe herum im wesentlichen flach ist, wobei die Arbeitsbaugruppe ein Arbeitswerkzeug (34, 54, 74, 94, 124, 144, 184) für flüssige Zubereitungen trägt, welches ein Blatt (4a) aufweist, wobei der Arbeitsbehälter mindestens eine Rippe (10) mit Dreiecksquerschnitt aufweist, die sich mindestens teilweise im Arbeitsbereich des Arbeitswerkzeugs erstreckt, **dadurch gekennzeichnet, daß** die Arbeitsbaugruppe (21, 41, 61, 81, 111, 131, 171) in bezug auf den Boden (101) des Arbeitsbehälters (20, 40, 60, 80, 110, 130, 170) abnehmbar ist, wobei der Deckel (22, 42, 62, 82, 112, 132, 172) Mittel (18) zum Führen der Arbeitsbaugruppe (21, 41, 61, 81, 111, 131, 171) aufweist, wobei die Höhe der Rippe(n) (10) zwischen 1 % und 4 % des Innendurchmessers des Arbeitsbehälters (20, 40, 60, 80, 110, 130, 170) beträgt, wobei der Abstand zwischen dem Ende des Blatts (4a) und der Spitze der Rippe(n) (10) zwischen 1/20 und 1/100 des Innendurchmessers des Arbeitsbehälters (20, 40, 60, 80, 110, 130, 170) beträgt, wobei das Blatt (4a) flach ist und ein freies Ende aufweist, welches sich im Inneren der Abrundung (103) befindet, wenn die Arbeitsbaugruppe (21, 41, 61, 81, 111, 131, 171), welche das Arbeitswerkzeug (34, 54, 74, 94, 124, 144, 184) aufweist, im Arbeitsbehälter (20, 40, 60, 80, 110, 130, 170) angeordnet ist.

2. Gerät nach Anspruch 1, **dadurch gekennzeichnet, daß** das freie Ende des Blatts (4a) nach unten geneigt ist.

3. Gerät nach einem der Ansprüche 1 oder 2, **dadurch gekennzeichnet, daß** das Arbeitswerkzeug (34, 54, 74, 94, 124, 184) mit einer Beschleunigungsvorrichtung (8) verbunden ist, wobei das Antriebsmittel (3) eine Antriebswelle (6) der Vorrichtung antreibt, wobei das Arbeitswerkzeug (34, 54, 74, 94, 124, 184) auf einer Abtriebswelle (7) der Vorrichtung koaxial zur Antriebswelle befestigt ist.

4. Gerät nach Anspruch 3, **dadurch gekennzeichnet, daß** die Beschleunigungsvorrichtung (8) ein Untergestell (23, 43, 63, 83, 113, 173) aufweist, welches mit Mitteln (104) zur Blockierung der Rotation des Untergestells zusammenwirken kann, wobei eine Nabe (28, 48, 68, 88, 118, 178) die Abtriebswelle (7) bildet, wobei ein Übertragungsmittel (25, 45, 65, 85, 115, 175) die Antriebswelle (6) bildet, die zum Zusammenwirken mit dem Antriebsmittel (3) vorgesehen ist, wobei das Übertragungsmittel Planeten (26, 46, 66, 86, 116, 176) trägt, welche auf Achsen (27, 47, 67, 87, 117, 177) angebracht sind, wobei die Planeten zum einen mit dem Umfang der Nabe und zum anderen mit einer Innenwand des Untergestells zusammenwirken.

5. Gerät nach Anspruch 4, **dadurch gekennzeichnet, daß** die Beschleunigungsvorrichtung (8) unter dem Behälter (110) angeordnet ist und daß die Mittel (104) zur Blockierung der Rotation des Untergestells (113) auf dem Gehäuse (1) oder unter dem Behälter angeordnet sind.

6. Gerät nach Anspruch 4, **dadurch gekennzeichnet, daß** die Beschleunigungsyorrichtung (8) im Behälter (20, 40, 60, 80, 170) angeordnet ist und daß die Mittel (104) zur Blockierung der Rotation des Untergestells (23, 43, 63, 83, 173) im Behälter angeordnet sind.

7. Gerät nach Anspruch 6, **dadurch gekennzeichnet, daß** die Arbeitsbaugruppe (21, 41, 61, 81, 171) mit der Beschleunigungsvorrichtung (8) fest verbunden ist.

8. Gerät nach einem der Ansprüche 6 oder 7, **dadurch gekennzeichnet, daß** das Arbeitswerkzeug (34, 54, 74, 94, 184) an einem Kranz (24, 44, 64, 84, 174) angebracht ist, wobei der Kranz auf der Nabe (28, 48, 68, 88, 178) angebracht ist.

9. Gerät nach Anspruch 8, **dadurch gekennzeichnet, daß** erste Dichtungsmittel (31, 51, 71, 91, 189) zwischen dem Kranz (24, 44, 64, 84, 174) und dem Untergestell (23, 43, 63, 83, 173) angeordnet sind.

10. Gerät nach einem der Ansprüche 6 bis 9, **dadurch gekennzeichnet, daß** zweite Dichtungsmittel (32, 52, 72, 92, 182) zwischen dem Untergestell (23, 43, 63, 83, 173) und dem Übertragungsmittel (25, 45, 65, 85, 175) angeordnet sind.

11. Gerät nach einem der Ansprüche 6 bis 10, **dadurch gekennzeichnet, daß** dritte Dichtungsmittel (53, 73, 93) zwischen dem Untergestell (43, 63, 83) und dem Arbeitsbehälter (40, 60, 80) angeordnet sind, wobei die Mittel vorzugsweise auf dem Untergestell angebracht sind.

12. Gerät nach einem der Ansprüche 6 bis 11, **dadurch gekennzeichnet, daß** das Untergestell (43, 83, 173) eine Glocke bildet, die vorgesehen ist, um in Anlage auf dem Boden (101) des Behälters (40, 80, 170) zu kommen, wobei das Übertragungsmittel (45, 85, 175) und die Planeten (46, 86, 176) unter der Glocke untergebracht sind.

13. Gerät nach Anspruch 12, **dadurch gekennzeichnet, daß** das Untergestell (43, 83, 173) auf der Nabe (48, 88, 178) frei drehbar angebracht ist, wobei das Übertragungsmittel (45, 85, 175) frei drehbar auf dem unteren Abschnitt der Nabe angebracht ist, wobei ein gezahnter Bereich, der mit den Planeten (46, 86, 176) zusammenwirkt, auf der Nabe zwischen dem Untergestell und dem Übertragungsmittel vorgesehen ist, wobei das Arbeitswerkzeug (54, 94, 184) mit dem oberen Abschnitt der Nabe eine Einheit bildet.

14. Gerät nach einem der Ansprüche 1 oder 2, **dadurch gekennzeichnet, daß** das Arbeitswerkzeug (144) durch das Antriebsmittel (3) mit der Rotationsgeschwindigkeit des Mittels angetrieben wird, wobei dem Motor (141) eine elektronische Geschwindigkeitsregelung zugeordnet ist.

15. Gerät nach einem der Ansprüche 1 bis 14, **dadurch gekennzeichnet, daß** der Arbeitsbehälter (20, 130, 170) eine Zwischenachse (15) aufweist, die im Boden (102) des Behälters mit einer Dichtung (33, 153) angebracht ist, wobei die Achse vorgesehen ist, um zum einen mit dem Antriebsmittel (3) und zum anderen mit dem Übertragungsmittel (25, 175), oder dem Körper (151) der Arbeitsbaugruppe (21, 131, 171), zusammenzuwirken.

16. Gerät nach einem der Ansprüche 1 bis 15, **dadurch gekennzeichnet, daß** obere Dichtungsmittel (11) unter dem Deckel (22, 42, 62, 82, 112, 132, 172) vorgesehen sind, um die Dichtung mit dem Behälter (20, 40, 60, 80, 110, 130, 170) sicherzustellen.

17. Gerät nach einem der Ansprüche 1 bis 16, **dadurch gekennzeichnet, daß** die Seitenwand (102) nach oben hin leicht erweitert ist.

18. Gerät nach einem der Ansprüche 1 bis 17, **dadurch gekennzeichnet, daß** die Geschwindigkeit des Endes des Blatts (4a) größer als 20 m/s ist.
